# EUROPÄISCHE PATENTSCHRIFT

(11) **EP 4 264 213 B1**
(45) Veröffentlichungstag und Bekanntmachung des Hinweises auf die Patenterteilung: **07.01.2026**
(21) Anmeldenummer: 21823219.7
(22) Anmeldetag: 26.11.2021
(51) Int. Cl.: G01K 13/02, G01K 7/18, G01K 7/02, G01K 3/10

(54) **THERMOMETER MIT DIAGNOSEFUNKTION**
THERMOMETER HAVING A DIAGNOSTIC FUNCTION
THERMOMÈTRE AVEC FONCTION DE DIAGNOSTIC

(30) Priorität: 16.12.2020 DE 102020133847
(43) Veröffentlichungstag der Anmeldung: 25.10.2023
(73) Patentinhaber: Endress+Hauser Wetzer GmbH+Co. KG, 87484 Nesselwang (DE)
(72) Erfinder: SCHALLES, Marc, 99097 Erfurt (DE)
(74) Vertreter: Endress + Hauser Group Services (Deutschland) AG+Co. KG
(86) Internationale Anmeldenummer: PCT/EP2021/083108
(87) Internationale Veröffentlichungsnummer: WO 2022/128405

(56) Entgegenhaltungen:
- WO-A1-2009/135504
- US-A1- 2011 283 780
- US-A1- 2011 308 548

## Beschreibung

Die Erfindung betrifft eine Vorrichtung zur Bestimmung und/oder Überwachung der Temperatur eines Mediums mit einem Temperatursensor zur Erfassung der Temperatur und einer Elektronik, sowie ein Verfahren zum Betreiben einer entsprechenden, insbesondere erfindungsgemäßen, Vorrichtung zur Bestimmung und/oder Überwachung der Temperatur.

Thermometer sind in unterschiedlichsten Ausgestaltungen aus dem Stand der Technik bekannt geworden. So gibt es Thermometer, welche zur Messung der Temperatur die Ausdehnung einer Flüssigkeit, eines Gases oder eines Festkörpers mit bekanntem Ausdehnungskoeffizienten heranziehen, oder auch solche, welche die elektrische Leitfähigkeit eines Materials oder eine davon abgeleitete Größe mit der Temperatur in Zusammenhang bringen, wie beispielsweise den elektrischen Widerstand bei Verwendung von Widerstandselementen, oder den thermoelektrischen Effekt im Falle von Thermoelementen. Ähnlich wird im Falle von Temperatursensoren in Form von pn-Dioden oder Transistoren die Temperaturabhängigkeit des jeweiligen Innenwiderstands ausgenutzt und die Temperatur beispielswese anhand des Sperrstroms oder der Durchlassspannung ermittelt. Dagegen wird bei Strahlungsthermometern, insb. Pyrometern, zur Bestimmung der Temperatur einer Substanz deren Wärmestrahlung ausgenutzt. Die jeweils zugrundeliegenden Messprinzipien sind jeweils in einer Vielzahl von Veröffentlichungen beschrieben worden.

Bei einem Temperatursensor in Form eines Widerstandselements sind unter anderem sogenannte Dünnschicht- und Dickschicht-Sensoren sowie sogenannte Heißleiter (auch als NTC-Thermistoren bezeichnet) bekannt geworden. Bei einem Dünnschicht-Sensor, insbesondere einem Resistance Temperature Detector (RTD), kommt beispielsweise ein mit Anschlussdrähten versehenes und auf ein Trägersubstrat aufgebrachtes Sensorelement zum Einsatz, wobei die Rückseite des Trägersubstrats in der Regel metallisch beschichtet ist. Als Sensorelemente werden sogenannte Widerstandselemente, welche beispielsweise durch Platinelemente gegeben sind, verwendet, die unter anderem unter den Bezeichnungen PT10, PT100, und PT1000 auch kommerziell erhältlich sind.

Bei Temperatursensoren in Form von Thermoelementen wiederum wird die Temperatur durch eine Thermospannung bestimmt, die zwischen den einseitig angeschlossenen Thermodrähten aus unterschiedlichen Materialien entsteht. Zur Temperaturmessung werden üblicherweise Thermoelemente nach DIN-Norm IEC584, z.B. Thermoelemente vom Typ K, J, N, S, R, B, T oder E, als Temperaturfühler eingesetzt. Aber auch andere Materialpaare, insbesondere solche mit einem messbaren Seebeck-Effekt, sind möglich.

Die Aufgabe von Thermometern in der Prozessautomatisierung besteht grundsätzlich darin, die Temperatur eines Mediums, bzw. eines Prozessmediums, zuverlässig und möglichst genau zu bestimmen. In der Praxis besteht hierbei das Problem, dass der jeweils verwendete Temperatursensor durch mehrere thermische Widerstände vom Medium getrennt ist. Diese kommen beispielsweise durch die einzelnen Komponenten des Thermometers, sowie ggf. durch das Behältnis, in welchen sich das Medium befindet, beispielsweise ein Behälter oder eine Rohrleitung, zustande. Häufig ist der Temperatursensor Teil eines sog. Messeinsatzes mit einem Mantelelement umfasst, welches mit einem Füllstoff gefüllt ist, in welchen der jeweilige Temperatursensor eingebettet ist. In diesem Falle ergeben sich relevante, serielle thermische Widerstände beispielsweise auch durch den Mantel und den Füllstoff.

Umfasst das Thermometer ferner beispielsweise ein Schutzrohr, so kommen weitere serielle thermische Widerstände durch das Schutzrohr selbst, sowie die thermische Kopplung zwischen dem Schutzrohr und dem Messeinsatz zustande. Eine entscheidende Rolle hinsichtlich des Erreichens eines thermischen Ausgleichs zwischen dem Prozessmedium und der Umgebung bzw. dem Thermometer spielt in diesem Zusammenhang beispielswiese die Wahl der Länge des Schutzrohrs und des Messeinsatzes. Ist/sind das Schutzrohr und/oder der Messeinsatz zu kurz, so kann es dazu kommen, dass im Bereich des Temperatursensors ein Temperaturgradient auftritt. Ein solcher Temperaturgradient hängt einerseits von der Differenz der Temperatur des Mediums bzw. der Prozesstemperatur und der Umgebungstemperatur ab. Andererseits spielen aber auch die Wärmeleitfähigkeiten der jeweils verwendeten Komponenten des Thermometers, der thermischen Kopplungen zwischen den einzelnen Komponenten sowie unterschiedliche Prozessparameter, wie beispielsweise eine Durchflussgeschwindigkeit des Prozessmediums o. ä. eine entscheidende Rolle.

Eine weitere Ursache für das Auftreten von Temperaturgradienten im Bereich des Temperatursensors, also einer unerwünschten Wärmeleitung, also einer Wärmezuleitung und/oder Wärmeableitung, liegt in der Bildung von Ablagerungsschichten und/oder Korrosion am Thermometer, beispielsweise am Schutzrohr oder Messeinsatz, insbesondere im Bereich des Temperatursensors. Das Bilden von Ablagerungen oder das Auftreten von Korrosion führt zu einer Veränderung, insbesondere einer Verschlechterung, der thermischen Kopplung zwischen dem Medium und der jeweils mit dem Medium in Kontakt kommenden Komponente des Thermometers, beispielsweise dem Schutzrohr oder Mantelelement.

Die vorangegangenen Überlegungen beschreiben das Phänomen der Wärmeleitung bei im Wesentlichen konstanten Temperaturen des Mediums und der Umgebung und betreffen damit eine statische Messwertabweichung. Im Falle von beispielsweise variabler Mediums- und/oder Umgebungstemperatur oder zur Wärmeleitung beitragenden thermischen Widerständen, welche von veränderlichen Prozess- oder Umgebungsparametern abhängen, können darüber hinaus auch dynamische Messwertabweichungen von Bedeutung sein. Solche dynamischen Messwertabweichungen können unabhängig von oder zusätzlich zu statischen Messabweichungen auftreten. Zudem können sich die zu statischen und dynamischen Messwertabweichungen führenden Faktoren gegenseitig beeinflussen.

Diese Überlegungen gelten analog auch für den Fall, dass es sich bei dem Thermometer um ein nicht-invasives Thermometer handelt, welches an einer Wandung des Behältnisses angebracht wird.

Unabhängig von der Ausgestaltung des Thermometers können auftretende, unerwünschte Temperaturgradienten im Bereich des Temperatursensors unabhängig von der exakten Ursache zu erheblichen Messwertverfälschungen führen.

Um derartige Messwertverfälschungen zu vermeiden, ist es beispielsweise bekannt geworden, anhand von drei äquidistanten Temperatursensoren den wahren Temperaturwert zu bestimmen (Klaus Irrgang, Lothar Michalowsky: Temperaturmesspraxis, ISBN-13: 978380272204). Dieses Vorgehen erfordert allerdings eine vergleichsweise komplexe Konstruktion und Signalauswertung.

Aus der DE102014119593A1 ist ein Thermometer bekannt geworden, dass die Detektion eines Temperaturgradienten entlang der Anschlussleitungen ermöglicht. Als Temperatursensor kommt ein Widerstandselement in der sog. 4-Leiterschaltung zum Einsatz. An einem der Anschlussdrähte wird ein Stück der Anschlussleitung durch ein anderes Material ersetzt, so dass aus dieser und einer weiteren Anschlussleitung ein Differenzthermoelement gebildet wird. Sobald an dem aus zwei Elementen bzw. zwei Materialien bestehenden Anschlussdraht ein Temperaturgradient auftritt, entsteht eine Thermospannung, die Aufschluss über den Temperaturgradienten entlang der Anschlussdrähte gibt. Dieser Temperaturgradient betrifft aber lediglich den Verlauf der Anschlussdrähte. Über etwaige direkt im Bereich des Temperatursensors auftretende Temperaturgradienten können keine direkten Aussagen getätigt werden.

Die DE102018116309A1 offenbart ein Thermometer, welches einen Temperatursensor mit einem temperaturempfindlichen Sensorelement, welches über zumindest eine erste und eine zweite Anschlussleitung elektrisch kontaktiert ist aufweist. Die erste Anschlussleitung ist in einen ersten und einen zweiten Abschnitt unterteilt, wobei der erste dem Sensorelement zugewandte Abschnitt aus einem ersten Material besteht, und wobei der zweite dem Sensorelement abgewandte Abschnitt aus einem zweiten sich von dem ersten unterscheidenden Material besteht, während die zweite Anschlussleitung ebenfalls aus dem zweiten Material besteht. Der erste Abschnitt der ersten Anschlussleitung und zumindest ein Teil der zweiten Anschlussleitung bilden dann einen ersten Differenz-Temperatursensor in Form eines Thermoelements, bei welchem es sich um einen Wärmestromsensor nach dem thermoelektrischen Prinzip handelt. Auf diese Weise ist ein Temperaturgradient bzw. Wärmestrom am Ort des Temperatursensors erfassbar. Auf diese Anmeldung wird im Folgenden vollumfänglich Bezug genommen. Ausgehend von der Problematik unerwünschter Temperaturgradienten im Bereich des Temperatursensors liegt der vorliegenden Erfindung die Aufgabe zugrunde, ein Thermometer mit möglichst hoher Messperformance, insbesondere mit hoher Messgenauigkeit, anzugeben.

Diese Aufgabe wird gelöst durch die Vorrichtung gemäß Anspruch 1 sowie durch das Verfahren gemäß Anspruch 7. Vorteilhafte Ausgestaltungen sind jeweils in den abhängigen Ansprüchen angegeben.

Die erfindungsgemäße Vorrichtung ist demnach dazu ausgestaltet, eine Aussage über eine thermische Kopplung der Vorrichtung an das Medium zu ermitteln. Auf diese Weise ist eine Korrektur der mittels des Temperatursensor erfassten Temperatur mit Hinblick auf mögliche Wärmeleitungseffekte (Wärmezuleitung und/oder Wärmeableitung) bzw. auf Temperaturgradienten zwischen dem Medium du dem Temperatursensor möglich. Grundsätzlich können sowohl statische als auch dynamische Messwertabweichungen erfasst werden. Die Diagnose-Einheit umfasst beispielsweise eine Recheneinheit, welche eine separate Einheit bilden, oder Teil der Elektronik der Vorrichtung sein kann.

Vorteilhaft kann die Aussage über die thermische Kopplung empirisch direkt am Ort der Vorrichtung ermittelt werden und bezieht sich damit immer auf den konkreten, aktuellen Anwendungsfall. Die Wärmeleitung ist grundsätzlich von vielen unterschiedlichen Faktoren, wie der Thermometergeometrie, der Konfiguration der Messstelle, den Umgebungsbedingungen und den Medieneigenschaften abhängig. Sämtlicher dieser Faktoren werden durch die empirische, lokale Bestimmung stets berücksichtigt. Zur Bestimmung der thermischen Kopplung oder Wärmeleitung sind demnach vorteilhaft keine weiteren Temperaturmesswerte von weiteren Thermometern oder die Kenntnis geometrischer oder anderer Parameter erforderlich. Auch Änderungen der thermischen Kopplung als Funktion der Zeit können erfindungsgemäß berücksichtigt werden. Die thermische Kopplung und die Wärmetransportsituation können also auch kontinuierlich überwacht werden.

In einer Ausgestaltung weist die Vorrichtung einen Messeinsatz, in welchem der Temperatursensor angeordnet ist, oder einen Messeinsatz und einen Eintauchkörper zur Aufnahme des Messeinsatzes auf. Alternativ beinhaltet eine weitere Ausgestaltung, dass die Vorrichtung derart ausgestaltet ist, dass zumindest der Temperatursensor mittelbar oder unmittelbar an einer äußeren Wandung eines Behältnisses befestigbar ist. Der Temperatursensor kann demnach einerseits direkt an der Wandung des Behälters sein. Ebenso kann er aber auch mittelbar angebracht sein, beispielsweise wenn er Teil eines Messeinsatzes ist, oder wenn eine Montageeinrichtung oder ähnliches verwendet wird, welche teilweise zwischen der Wandung und dem Temperatursensor angeordnet ist. Die vorliegende Erfindung bezieht sich somit auf invasive und nicht invasive Thermometer.

Das Thermometer kann ebenfalls entsprechend einer der in der DE102014119593A1 beschriebenen Ausgestaltungen ausgebildet sein. Ebenso beinhaltet eine vorteilhafte Ausgestaltung, dass der Temperatursensor über zumindest eine erste und eine zweite Anschlussleitung elektrisch kontaktiert, wobei die erste Anschlussleitung in einen ersten und einen zweiten Abschnitt unterteilt ist, wobei der erste dem Sensorelement zugewandte Abschnitt aus einem ersten Material besteht, und wobei der zweite dem Sensorelement abgewandte Abschnitt aus einem zweiten sich von dem ersten unterscheidenden Material besteht, wobei die zweite Anschlussleitung aus dem zweiten Material besteht, und wobei der erste Abschnitt der ersten Anschlussleitung und zumindest ein Teil der zweiten Anschlussleitung einen ersten Differenz-Temperatursensor in Form eines Thermoelements bilden. Es ist demnach auch eine der Lehre der bereits erwähnten DE102018116309A1 entsprechende Ausgestaltung denkbar.

Infolge der Variation der Leistung des Eingangssignals kommt es zu Erwärmungen und/oder Abkühlungen im Bereich des Temperatursensors als Funktion des Eingangssignals bzw. der zeitlichen Variation der Leistung. Dabei kann einerseits der Temperatursensor selbst mit dem Eingangssignal variabler Leistung beaufschlagt werden. Dies ist insbesondere im Falle eines Temperatursensors in Form eines Widerstandselements von Vorteil. Eine weitere Ausgestaltung der Vorrichtung beinhaltet jedoch, dass die Vorrichtung eine Heizeinheit zum Heizen eines den Temperatursensor umgebenden Bereichs umfasst, wobei die Diagnose-Einheit dazu ausgestaltet ist, die Heizeinheit mit dem Eingangssignal variabler Leistung zu beaufschlagen und aus dem Ausgangssignal des Temperatursensors die Aussage über eine thermische Kopplung der Vorrichtung an das Medium zu ermitteln. Im Falle, dass die Vorrichtung eine Heizeinheit beinhaltet, ist es demnach möglich, die Heizeinheit mit variabler Leistung zu betreiben und die Antwort des Temperatursensors auszuwerten.

Eine weitere Ausgestaltung sieht vor, dass die Diagnose-Einheit einen Energiespeicher, insbesondere einen Kondensator oder einen Akku, umfasst. Auf diese Weise kann stets ausreichend Energie zum Generieren des Eingangssignals variabler Leistung garantiert werden, auch wenn die Vorrichtung nur über eine begrenzte Leistungsaufnahme verfügt, wie beispielsweise bei einer Ausgestaltung der Vorrichtung als Zweidraht-Messgerät.

Die der Erfindung zugrunde liegende Aufgabe wird außerdem gelöst durch das Verfahren nach dem Anspruch 7.

Bei dem Eingangssignal handelt es sich vorzugsweise um ein Wechselsignal, beispielsweise ein Sinus-, Rechteck-, oder Dreieck-Signal. Eine Ausgestaltung beinhaltet weiterhin, dass für das Eingangssignal ein mittelwertfreies Signal verwendet wird, derart, dass die mittlere Leistung als Funktion der Zeit konstant ist. Möglich ist ebenfalls die Verwendung eines Rauschsignals als Eingangssignals, insbesondere entsprechend einem weißen Rauschen.

Es ist vorteilhaft möglich, anhand der ermittelten Aussage über die thermische Kopplung auch einen Zustandsindikator für das Thermometer zu bestimmen. In diesem Fall handelt es sich um ein Verfahren, welches ebenfalls der Zustandsüberwachung der zur Bestimmung und/oder Überwachung der Temperatur verwendeten Vorrichtung dient. Bei dem Zustandsindikator handelt es sich beispielsweise um eine Aussage über einen thermischen oder mechanischen Kontakt im Bereich des Messsystems umfassend die Vorrichtung und das Behältnis mit dem Medium. Im Falle einer invasiven Temperaturbestimmung und/oder -überwachung kann zudem eine Aussage über das Auftreten von Korrosion, oder einer Belagsbildung getätigt werden.

In einer Ausgestaltung des Verfahrens wird eine Heizeinheit zum Heizen eines den Temperatursensor umgebenden Bereichs mit dem Eingangssignal beaufschlagt, und aus dem Ausgangssignal des Temperatursensors die Aussage über eine thermische Kopplung der Vorrichtung an das Medium ermittelt wird.

Eine weitere Ausgestaltung des Verfahrens sieht vor, dass zur zeitlichen Variation der Leistung des Eingangssignals eine Frequenz- oder Amplitudenmodulation durchgeführt wird. Alternativ beinhaltet eine Ausgestaltung, dass ein gepulstes Eingangssignal verwendet wird, insbesondere dass einzelne Pulse zumindest hinsichtlich einer charakteristischen Größe, beispielsweise Frequenz oder Amplitude, variiert werden. Im Falle eines gepulsten Eingangssignals kann anhand zumindest zweier Pulse eine Interpolation und eine Nullpunktbestimmung vorgenommen werden, die die zusätzliche Durchführung eines Eigenerwärmungstests der Vorrichtung ermöglicht.

Eine Ausgestaltung des Verfahrens beinhaltet, dass in einem Messbetriebsmodus die Temperatur des Mediums bestimmt wird, dass in einem Diagnosebetriebsmodus die Aussage über eine thermische Kopplung der Vorrichtung an das Medium ermittelt wird, und dass der Messbetriebsmodus und der Diagnosebetriebsmodus gleichzeitig oder abwechselnd ausgeführt werden, oder wobei der Diagnosebetriebsmodus auf Bedarf durch einen Benutzer der Vorrichtung initialisiert wird. Die Ergebnisse des Diagnosebetriebsmodus können dann umgehend im Messbetriebsmodus bei der Bestimmung der Temperatur des Mediums berücksichtigt werden. Auch eine Ausgabe des Ergebnisses der Diagnose ist denkbar.

In einer Ausgestaltung des Verfahrens wird zum Ermitteln der zumindest einen Aussage über eine thermische Kopplung der Vorrichtung an das Medium ein Aufheizverhalten, ein Abkühlverhalten, eine Ansprechzeit oder eine von zumindest einer dieser Größen abgeleitete Größe des Temperatursensors herangezogen. Es sei darauf verwiesen, dass diese Aufzählung der Möglichkeiten zur Auswertung des Ausgangssignals des Temperatursensors hinsichtlich der thermischen Kopplung an das Medium keineswegs abschießend ist. Vielmehr sind zahlreiche, weitere Auswertungsarten denkbar, wie beispielsweise eine Fourier-Analyse, welche ebenfalls unter die vorliegende Erfindung fallen. Bei den hier explizit genannten Möglichkeiten handelt es sich lediglich um besonders bevorzugte Varianten.

In diesem Zusammenhang ist es von Vorteil, wenn ein zeitlicher Verlauf des Aufheizverhaltens, des Abkühlverhaltens, der Ansprechzeit oder der abgeleiteten Größe des Temperatursensors betrachtet wird, und wobei anhand einer Änderung des Aufheizverhaltens, des Abkühlverhaltens, der Ansprechzeit oder der abgeleiteten Größe eine Änderung der thermischen Kopplung festgestellt wird. In dieser Hinsicht ist es beispielsweise denkbar, Aufheiz- und/oder Abklingkonstanten, bestimmte Endwerte eines Aufheiz- oder Abkühlvorgangs infolge einer Änderung der Leistung des Eingangssignals oder einer davon abgeleiteten Größe, oder auch Vergleiche mit, insbesondere hinterlegten, Grenzwerten durchzuführen.

Im Falle, dass das Medium bekannt ist, ist es außerdem von Vorteil, eine Strömungsgeschwindigkeit des Mediums anhand des Ausgangssignals des Temperatursensors zu ermitteln.

Das beanspruchte Verfahren beinhaltet, dass es sich bei der zumindest einen Aussage über die thermische Kopplung um eine Aussage über einen Wärmeübergangskoeffizienten, einen Wärmetransportwiderstand, einen Wärmeleitwiderstand und/oder einen Wärmedurchgangswert im Bereich der Vorrichtung, insbesondere im Bereich des Temperatursensors, oder eines Übergangs zwischen der Vorrichtung und einem das Medium enthaltenden Behältnisses, handelt, oder dass es sich um eine Änderung eines mechanischen bzw. thermischen Kontakts von zumindest zwei Komponenten der Vorrichtung oder der Vorrichtung und dem Behältnis handelt. Im Prinzip können alle für die genaue Temperaturbestimmung relevanten thermischen Widerstände berücksichtigt werden.

Anhand der Aussage über die thermische Kopplung der Vorrichtung an das Medium kann eine Korrektur der mittels des Temperatursensors erfassten Temperatur vorgenommen werden. Hierzu kann beispielsweise ein Korrekturwert, beispielsweise in der Diagnose-Einheit oder in der Elektronik, ermittelt und dem Messwert für die Temperatur vom Temperatursensors hinzugefügt werden. Es ist also auch eine Korrektur, Justage und/oder Kompensation von den jeweils mittels des Temperatursensors ermittelten Messwerten in Bezug auf unerwünschte Temperaturgradienten, die im Bereich des Temperatursensors auftreten können, möglich.

In diesem Zusammenhang beinhaltet das beanspruchte Verfahren, dass anhand des Empfangssignals ein Messwert für die Temperatur des Mediums ermittelt wird, dass ein Wärmestrom, insbesondere eine Wärmeleitung, oder eine mit dem Wärmestrom in Verbindung stehende Größe, im Bereich des Temperatursensors ermittelt wird, dass eine Messwertabweichung für den Messwert für die Temperatur anhand eines Modells für einen Wärmestrom im Bereich des Temperatursensors bestimmt wird, und dass der Messwert für die Temperatur mittels der Messwertabweichung korrigiert wird. In diesem Zusammenhang sei auf die bisher unveröffentlichte deutsche Patentanmeldung mit dem Aktenzeichen 102019134603.7 verwiesen, auf welche im Rahmen der vorliegenden Anmeldung ebenfalls vollumfänglich Bezug genommen wird. Diese Ausgestaltung des Verfahrens ist ferner bevorzugt im Zusammenhang mit einer Vorrichtung mit einem Differenz-Temperatursensor, wie in Zusammenhang mit der erfindungsgemäßen Vorrichtung beschrieben, verwendbar. Der Differenz-Temperatursensor kann dann vorteilhaft zur Ermittlung des Wärmestroms dienen.

Zur Bestimmung der Messwertabweichung wird gemäß dieser Ausgestaltung ein Wärmestrom im Bereich des Temperatursensors oder eine mit diesem Wärmestrom in Zusammenhang stehende Größe, beispielsweise eine vom Wärmestrom abgeleitete Größe, oder eine den Wärmestrom repräsentierende Größe, beispielsweise eine Spannung, ermittelt und anhand eines geeigneten Modells hieraus eine Messwertabweichung für die Temperaturmesswerte bestimmt. Der Wärmestrom kann mittels einer separaten Vorrichtung oder mittels des für die Temperaturbestimmung und/oder -überwachung verwendeten Thermometers ermittelt werden.

Bei dem Modell handelt es sich vorzugsweise um ein parametrisches Modell, welches insbesondere zumindest einen statischen und einen dynamischen Term zur Bestimmung der Messwertabweichung aufweist.

In diesem Zusammenhang ist es von Vorteil, wenn zumindest ein Parameterwert eines Parameters bzw. ein Koeffizientenwert eines Koeffizienten des Modells anhand der Aussage über die thermische Kopplung der Vorrichtung an das Medium bestimmt wird.

Es ist ferner von Vorteil, wenn für zumindest einen Parameter des Modells eine Vielzahl an Parameterwerten in Abhängigkeit der thermischen Kopplung der Vorrichtung vorgegeben oder hinterlegt sind, und wobei in Abhängigkeit der ermittelten Aussage über die Kopplung ein Parameterwert für den Parameter ausgewählt wird. Alternativ ist es von Vorteil, wenn der Parameterwert anhand der Aussage über die Kopplung ermittelt wird.

Es sei darauf verwiesen, dass die in Zusammenhang mit der erfindungsgemäßen Vorrichtung beschriebenen Ausgestaltungen mutatis mutandis auch auf das erfindungsgemäße Verfahren anwendbar sind und umgekehrt.

Die Erfindung wird anhand der nachfolgenden Zeichnungen näher erläutert. Es zeigt:
Fig. 1: (a) eine schematische Darstellung eines invasiven Thermometers mit einem Temperatursensor in Form eines Widerstandselements, einer Heizeinheit und einer erfindungsgemäßen Diagnose-Einheit, und (b) eine schematische Darstellung eines nicht invasiven Thermometers mit einem Temperatursensor in Form eines Widerstandselements und einer Diagnose-Einheit, und
Fig. 2: beispielhafte Ausgestaltung eines Thermometers mit einem Differenz-Temperatursensor zur Bestimmung des Wärmestroms.

In den Figuren sind gleiche Merkmale mit gleichen Bezugszeichen gekennzeichnet.

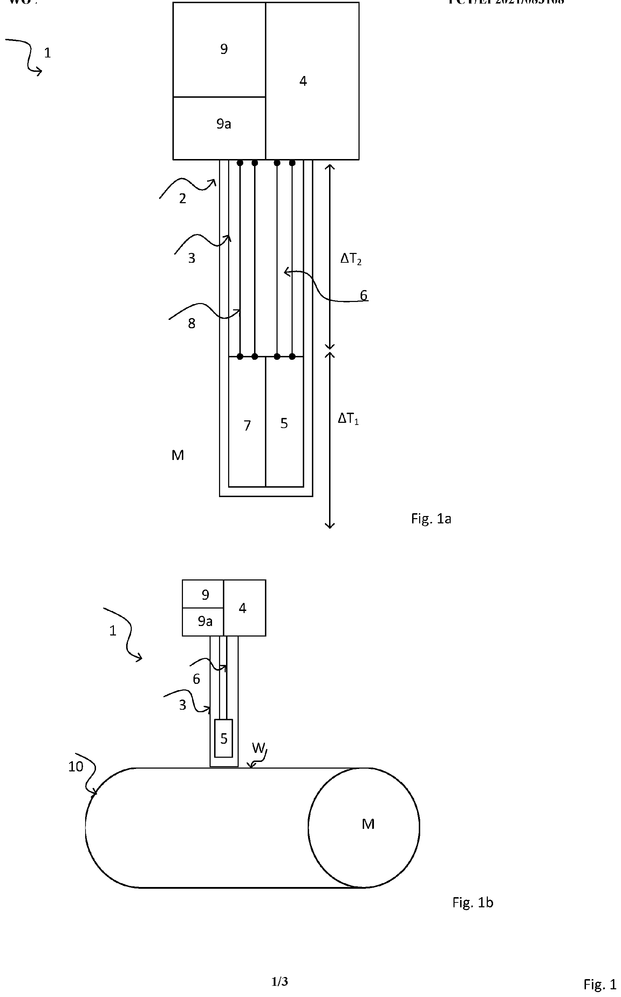

In Fig.1a ist eine schematische Abbildung eines invasiven Thermometers 1 mit einem Eintauchkörper 2, beispielsweise einem Schutzrohr, einem Messeinsatz 3, und einer Elektronik 4 gemäß Stand der Technik gezeigt. Der Messeinsatz 3 ist in den Eintauchkörper 2 eingebracht und umfasst einen Temperatursensor 5, welcher im vorliegenden Fall ein temperatursensitives Element in Form eines Widerstandselements aufweist, und ein Heizelement 7. Der Temperatursensor 5 und das Heizelement 6 können in einen in dem Messeinsatz 3 angeordneten, hier nicht eingezeichneten, Füllstoff eingebettet sein. Der Temperatursensor 5 ist über die Anschlussleitungen 6 und das Heizelement 7 über die Anschlussleitungen 8 elektrisch kontaktiert und jeweils mit der Elektronik 4 verbunden. Die Elektronik 4 umfasst für die hier beispielhaft gezeigte Ausgestaltung auch die erfindungsgemäße Diagnose-Einheit 9 mit einer Einrichtung 9a zur Erzeugung eines Eingangssignals variabler Leistung. In anderen Ausgestaltungen kann die Elektronik 4 auch separat vom Messeinsatz 3 und Eintauchkörper 2 angeordnet und/oder die Diagnose-Einheit 9 separat von der Elektronik 4 und/oder dem Messeinsatz 3 und Eintauchkörper 2 angeordnet sein. Auch muss es sich bei dem Sensorelement 5 nicht notwendigerweise um ein Widerstandselement handeln, oder die Anzahl der jeweils verwendeten Anschlussleitungen 6,8 muss nicht notwendigerweise zwei betragen. Vielmehr kann die Anzahl der Anschlussleitungen 6,8 je nach angewendetem Messprinzip und verwendetem Temperatursensor 5 bzw. verwendeter Heizeinheit 7 passend gewählt werden. Auch sei darauf verwiesen, dass die Verwendung einer zusätzlichen Heizeinheit 7 grundsätzlich optional ist. Zudem sind zahlreiche Varianten für die Anordnung der Heizeinheit 7 relativ zum Temperatursensor 5 denkbar.

Alternativ kann es sich bei der erfindungsgemäßen Vorrichtung 1 aber auch um ein nicht invasives Thermometer handeln, wie in Fig. 1b illustriert. In diesem Falle ist das Thermometer 1 von außen an einer Wandung W eines das Medium M führenden Behältnisses 10 angeordnet und ragt nicht ins Medium M hinein, wie im Falle der Ausgestaltung gemäß Fig. 1a. Auch für diese Ausgestaltung ist der Temperatursensor 5 beispielhaft in Form eines Widerstandselements ausgestaltet. Eine Heizeinheit 7 ist dagegen für diese Ausgestaltung nicht vorhanden, wäre aber zusätzlich möglich. Auch hier ist der Temperatursensor 5 zusammen mit den Anschlussleitungen 6 in einem Messeinsatz 3 angeordnet. Der Temperatursensor 5 ist entsprechend vermittels des Messeinsatzes 3, also mittelbar, an der Wandung W des Behältnisses 10 angeordnet. In anderen Ausgestaltungen kann auch eine unmittelbare Anordnung oder eine mittelbare Anordnung vermittels einer Montageeinrichtung vorgenommen werden. Auch die hier gezeigte kompakte Bauweise mit integrierter Elektronik 4 ist nicht zwingend. Dasselbe gilt für die gezeigte Orientierung des Messeinsatzes 3, welcher nicht zwingend vertikal ausgerichtet sein muss, sondern in anderen Ausgestaltungen auch andere Orientierungen aufweisen kann. Beispielsweise ist auch eine tangentiale Anordnung, in welcher eine Längsachse L des Messeinsatzes 3 parallel zur Wandung W des Behältnisses 10 angeordnet ist, denkbar. Ebenso ist die Verwendung eines Messeinsatzes 3 für ein nicht invasives Thermometer 1 nicht notwendigerweise erforderlich. Vielmehr sind, wie im Falle der Fig. 1a, zahlreiche weitere Ausgestaltungen möglich, welche allesamt unter die vorliegende Erfindung fallen.

Wie bereits dargelegt, hängt die Messgenauigkeit eines Thermometers 1 in hohem Maße von den jeweiligen Materialien und, insbesondere thermischen, Kontaktierungen, insbesondere im Bereich des Temperatursensors 5 ab. Der Temperatursensor 5 steht mittelbar, d.h. beispielsweise über den Eintauchkörper 2, Messeinsatz 3 und/oder die Wandung W des Behältnisses 10, mit dem Medium M in thermischem Kontakt. Der Temperatursensor 5 ist also durch mehrere, thermische Widerstände vom Medium M getrennt. Es kann deshalb je nach Prozessbedingungen und/oder der jeweiligen konstruktiven Ausgestaltung des Thermometers 1 dazu kommen, dass zwischen dem Medium M und dem Thermometer zumindest zeitweise und/oder teilweise kein thermisches Gleichgewicht herrscht. In Folge des Fehlens eines thermischen Gleichgewichts können beispielsweise im Bereich des Temperatursensors 5 oder auch entlang der Anschlussleitungen 6 Temperaturgradienten ΔT₁ oder ΔT₂ entstehen, die aufgrund resultierender Wärmeströme die jeweils mit dem Temperatursensor 5 gemessenen Temperaturwerte verfälschen. Dies ist beispielhaft in Fig. 1a eingezeichnet. Darüber hinaus können sich auch solche thermischen Widerstände ändern, welche sich nicht in unmittelbarer Nähe zum Temperatursensor 5 bzw. Medium M befinden. Auch eine Änderung dieser thermischen Widerstände führt zu einer geänderten Kopplung an das Medium M. Im Falle eines nicht invasiven Thermometers 1 kann es sich in diesem Zusammenhang beispielsweise um eine außerhalb des Behältnisses 10 angeordnete thermische Isolation für den Temperatursensor 5 handeln.

Mit der erfindungsgemäßen Diagnose-Einheit kann nun, je nach Ausgestaltung des Thermometers 1, der Temperatursensor 5 oder die Heizeinheit 7 mit einem Eingangssignal variabler Leistung beaufschlagt werden und das jeweilige Ausgangssignal des Temperatursensors 5 hinsichtlich der thermischen Kopplung an das Medium M ausgewertet werden. Auf diese Weise kann die Messgenauigkeit der Vorrichtung 1 deutlich erhöht werden.

Besondere Relevanz haben Temperaturgradienten ΔT₁ im Bereich des Temperatursensors 5. Eine Ausgestaltung der Vorrichtung 1 umfassend einen Differenz-Temperatursensor kann demnach eine weitere Verbesserung der Messgenauigkeit herbeiführen.

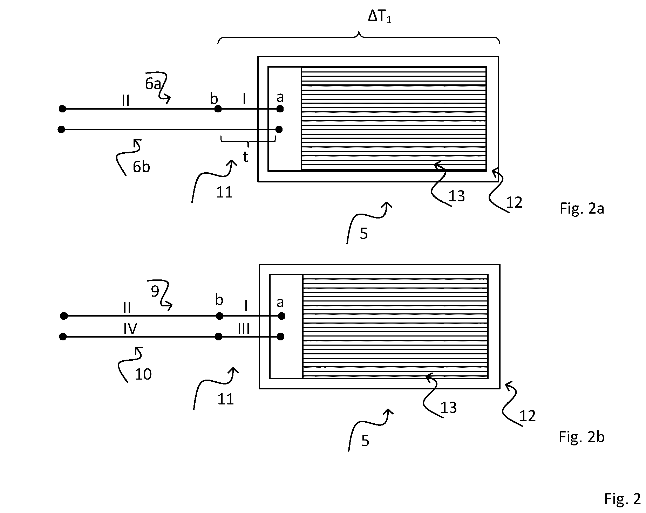

In Fig. 2 sind deshalb beispielhaft mögliche Ausgestaltungen eines Thermometers 1 mit einem Differenz-Temperatursensor 11 zur Bestimmung des Wärmestroms gezeigt. Ein Temperatursensor 5 in Form eines auf ein Substrat 12 aufgebrachten Widerstandselements 13 dient der Bestimmung und/oder Überwachung der Temperatur T des Mediums M. Der Temperatursensor 5 ist mittels der beiden Anschlussleitungen 6a und 6b elektrisch kontaktiert und wird somit in der sogenannten Zweileiter-Schaltung betrieben. Im vorliegenden Falle sind beide Anschlussleitungen 6a und 6b direkt an das Widerstandselement 13 angebracht. Es sei aber an dieser Stelle darauf verwiesen, dass grundsätzlich alle dem Fachmann bekannten Kontaktierungen zur Verbindung des Temperatursensors 5 mit den Anschlussleitungen 6 möglich sind.

Die erste Anschlussleitung 6a ist in einen ersten I und einen zweiten Abschnitt II unterteilt. Der erste Abschnitt I besteht dabei aus einem ersten Material, und der zweite Abschnitt II sowie die zweite Anschlussleitung 6b bestehen aus einem zweiten sich vom ersten unterscheidenden Material. Auf diese Weise bilden der erste Abschnitt I der ersten Anschlussleitung 6a und zumindest ein Teil t der zweiten Anschlussleitung 6b einen ersten Differenz-Temperatursensor 11 in Form eines Thermoelements. Die beiden Materialien für den ersten Abschnitt I der ersten Anschlussleitung 6a und den zweiten Abschnitt II der ersten Anschlussleitung 6a sowie für die zweite Anschlussleitung 6b werden derart gewählt, dass aufgrund einer Temperaturdifferenz zwischen den Punkten a und b, und den sich entsprechend aufgrund des thermoelektrischen Effekts in den Abschnitten 9a und t ausbildenden unterschiedlichen Thermospannungen, mittels des Differenz-Temperatursensors 11 eine Thermospannung detektierbar ist.

Der erste Abschnitt I der ersten Anschlussleitung 6a ist bevorzugt kurz im Vergleich zur Gesamtlänge der ersten Anschlussleitung 6a, beispielsweise liegt die Länge des ersten Abschnitts I der ersten Anschlussleitung 6a im Bereich von wenigen Millimetern oder Zentimetern. Auf diese Weise kann sichergestellt werden, dass die mittels des ersten Differenz-Temperatursensors 11 ermittelten Werte möglichst einen Temperaturgradienten ΔT₁ im Bereich des Temperatursensors 5 wiederspiegeln.

Bei dem in Fig. 2a gezeigten Beispiel sind die erste 6a und zweite Anschlussleitung 6b separat an das Widerstandselement 13 angebracht. Der erste Abschnitt I der ersten Anschlussleitung 6a und der Teil t der zweiten Anschlussleitung 6b sind also mittelbar über das Widerstandselement 13 verbunden. In einer anderen Ausgestaltung könnte der erste Abschnitt I der ersten Anschlussleitung 6a und der Teil t der zweiten Anschlussleitung 6b aber auch direkt miteinander verbunden und dann an den Temperatursensor 5 angebracht sein.

In der in Fig. 2b gezeigten Ausgestaltung ist auch die zweite Anschlussleitung 6b in einen ersten III und einen zweiten Abschnitt IV unterteilt. Der erste Differenz-Temperatursensor 11 ist in diesem Fall durch die ersten Abschnitte I und III der ersten 6a und zweiten 6b Anschlussleitungen gebildet. Gemäß Fig. 2b, aber nicht notwendigerweise, sind die beiden ersten Abschnitte I und III der beiden Anschlussleitungen 6a und 6b gleich lang. Bei den zweiten Abschnitten II und IV der ersten 6a und zweiten 6b Anschlussleitungen handelt es sich in diesem Fall um, vorzugsweise gleichartig ausgestaltete, Verlängerungsdrähte. Aber auch im Falle der Ausgestaltung gemäß Fig. 2a ist es von Vorteil, wenn der zweite Abschnitt II der ersten Anschlussleitung 6a und die zweite Anschlussleitung 6b gleichartig ausgestaltet sind.

Mittels des Differenz-Temperatursensors 11 kann ein Wärmestrom W ermittelt und ein geeignetes Modell MOD für die Wärmeleitung bereitgestellt werden, mittels welchem eine Messwertabweichung δT bestimmbar ist. Mittels der Messwertabweichung δT lassen sich die mittels des Temperatursensors 5 ermittelten Messwerte korrigieren und/oder justieren, also Messfehler kompensieren und/oder es kann eine Zustandsüberwachung des Thermometers 1 durchgeführt werden.

Die Erfindung ist in diesem Zusammenhang jedoch keineswegs auf derart ausgestaltete Kombinationen der Temperatursensoren 5 und zumindest einem zusätzlichen Thermoelement begrenzt. In anderen Ausgestaltungen, in welchen neben einem Temperatursensor 5 ein zusätzliches Thermoelement vermittels der Anschlussleitungen 6 gebildet wird, können dagegen beispielsweise auch jeweils dem Temperatursensor 5 zugewandte Abschnitte der Anschlussleitungen 6 gleich und dem Temperatursensor 5 abgewandte Abschnitte unterschiedlich ausgestaltet sein. Wie bereits erwähnt, ist auch eine Ausgestaltung entsprechend der Lehre der DE102014119593A1möglich.

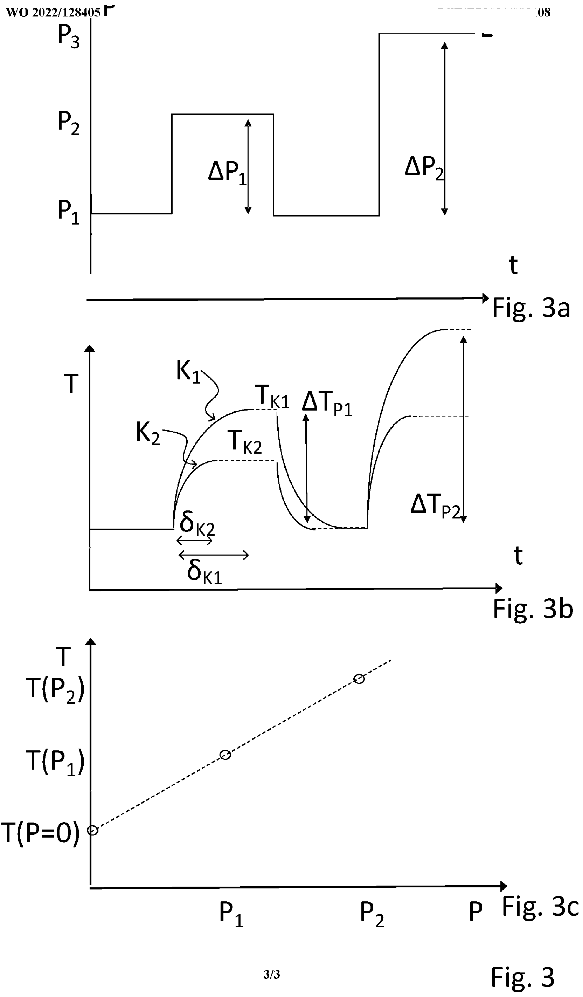

Fig. 3 illustriert eine bevorzugte Ausgestaltung des erfindungsgemäßen Verfahrens. Fig. 3a zeigt ein Eingangssignal E variabler Leitung P als Funktion der Zeit t, welches für das gezeigte Beispiel in Form eines gepulsten Signals vorliegt. Dargestellt sind zwei Pulse ΔP₁=P₂-P₁ und ΔP₂=P₃-P₁ mit unterschiedlicher Amplitude. Neben einer Variation der Amplitude können auch andere charakteristische Größen, wie beispielsweise der Frequenz, oder auch mehrere charakteristische Größen variiert werden, welche eine Änderung der Leitung P des Eingangssignals E hervorrufen. Das Ausgangssignal A des Temperatursensors 5 ist in Reaktion auf das Eingangssignal E aus Fig. 3a ist in Fig. 3b illustriert. Dargestellt ist die Temperaturantwort des Temperatursensors 5 infolge des gepulsten Eingangssignals E aus Fig. 3a. Die Amplitude T des Ausgangssignals A ändert sich zum einen mit der Leistung P. So weist die Temperaturantwort ΔT_{P1} auf den ersten Leistungspuls ΔP₁ eine kleinere Amplitude auf als die hier nur angedeutete Temperaturantwort ΔT_{P2} auf den ersten Leistungspuls ΔP₂.

Zudem sind aber die Amplitude T und auch eine Zeitkonstante δ der Sprungantwort des Temperatursensors 5 infolge des Leitungspulses ΔP₁ von der Kopplung an das Medium M abhängig, wie im Folgenden am Beispiel der Antwort auf den ersten Leistungspuls ΔP₁ näher erläutert. Die mit K₁ bezeichnete Kurve betrifft eine im Vergleich zu der mit K₂ bezeichneten Kurve eine schlechte Kopplung an das Medium M und K₂ eine vergleichsweise gute Kopplung an das Medium M. Im Falle der vergleichsweise schlechten Kopplung K1 weist das Antwortsignal A infolge des Leistungspulses ΔP₁ eine höhere Amplitude T_{K1} und eine größere Zeitkonstante δ_{K1}. Die Reaktion auf den Leitungspuls ΔP₁ ist somit deutlich träger, während die Amplitude der Antwort höher ist. Im Falle der guten Kopplung K₂ dagegen weist das Antwortsignal A infolge des Leistungspulses ΔP₁ eine geringere Amplitude T_{K2} und eine geringere Zeitkonstante δ_{K2}. Die Reaktion auf den Leitungspuls ΔP₁ ist somit deutlich schneller, während die Amplitude der Antwort geringer ist. Die Amplitude des Ausgangssignals A in Reaktion auf das Eingangssignal E variabler Leistung P sinkt also mit der Güte der Kopplung, während die Zeitkonstante δ mit zunehmender Güte der Kopplung steigt. Diese Überlegungen lassen sich unmittelbar auf die ebenfalls in Fig. 3b dargestellte Antwort auf den zweiten Leistungspuls ΔP₂ des Eingangssignals E übertragen. Es versteht sich von selbst, dass neben der hier beschriebenen Auswertung der Amplitude T und Zeitkonstante δ auch eine oder mehrere andere charakteristische Größen des Ausgangssignals A oder von zumindest einer charakteristischen Größe des Ausgangssignals A abgeleitete Größen zur Ermittlung einer Aussage über die Kopplung an das Medium M herangezogen werden können, wie beispielsweise Verhältnisse der Amplituden, Zeitprozentkennwerte, Verhältnisse der Temperaturänderungen nach bestimmten festgelegten Zeitintervallen und viele weitere.

Zudem ist es möglich, für unterschiedliche Leistungspulse ΔP die Amplitude T_{K} des Antwortsignals A zu ermitteln. Dies erlaubt auch einen Rückschluss auf einen Zusammenhang zwischen der Leistung P des Eingangssignals und der gemessenen Temperatur T und damit eine Extrapolation auf eine Temperatur T im Falle von P=0. Es ist somit die Durchführung eines Eigenerwärmungstests möglich, wie in Fig. 3c illustriert. In diesem Zusammenhang ist es jedoch wünschenswert, wenn sich die Temperatur T des Mediums M für den zur Extrapolation benötigten Zeitraum nicht oder nur unwesentlich ändert.

### Bezugszeichenliste

- 1: Thermometer
- 2: Eintauchkörper
- 3: Messeinsatz
- 4: Elektronik
- 5: Sensorelement
- 6, 6a,6b: Anschlussleitung
- I-IV: Abschnitte der Anschlussleitungen
- 7: Heizelement
- 8: Anschlussdrähte
- 9: Diagnose-Einheit
- 9a: Einrichtung
- 10: Behältnis
- 11: Differenz-Temperatursensor
- M: Medium
- T: Temperatur
- E: Eingangssignal
- A: Ausgangssignal
- P, P₁, P₂, P₃: Leistung
- ΔP, ΔP₁, ΔP₂: Leistungspulse
- ΔT_{P1}, ΔT_{P2}: Temperatur infolge unterschiedler Leistungspulse
- K, K₁, K₂: Kopplungen an das Medium
- T_{K1}, T_{K2}: Temperatur infolge unterschiedlicher Kopplung
- δ_{K1}, δ_{K2}: Zeitkonstante infolge eines Leistungspulses
- ΔT, ΔT₁: Temperaturgradient
- δT: Messwertabweichung
- MOD: Modell für die Wärmeleitung
- t: Teil des zweiten Anschlussleitung

## Patentansprüche

1. Vorrichtung (1) zur Bestimmung und/oder Überwachung der Temperatur (T) eines Mediums (M), wobei die Vorrichtung einen Temperatursensor (5) zur Erfassung der Temperatur (T) und eine Elektronik (4) umfasst,
wobei der Temperatursensor (5) ein temperaturempfindliches Sensorelement (13), welches über zumindest eine erste Anschlussleitung (6a) und eine zweite Anschlussleitung (6b) elektrisch mit der Elektronik (4) kontaktiert ist, umfasst,
wobei die erste Anschlussleitung (6a) in einen ersten (I) und einen zweiten Abschnitt (II) unterteilt ist,
wobei der erste dem Sensorelement (13) zugewandte Abschnitt (I) aus einem ersten Material besteht, und wobei der zweite (II) dem Sensorelement (13) abgewandte Abschnitt aus einem zweiten sich von dem ersten unterscheidenden Material besteht, wobei die zweite Anschlussleitung (6b) aus dem zweiten Material besteht,
und wobei der erste Abschnitt (I) der ersten Anschlussleitung (6a) und zumindest ein Teil (t) der zweiten Anschlussleitung (6b) einen ersten Differenz-Temperatursensor (11) in Form eines Thermoelements bilden, **dadurch gekennzeichnet, dass** die Vorrichtung eine Diagnose-Einheit (9) umfasst,
welche eine Einrichtung (9a) zur zeitlichen Variation einer Leistung (P) eines Eingangssignals (E), mittels welchem der Temperatursensor (5) oder zumindest eine Komponente der Vorrichtung (1) beaufschlagbar ist, aufweist, und
welche Diagnose-Einheit (9) dazu ausgestaltet ist, anhand eines Ausgangssignals (A) des Temperatursensors (5) in Reaktion auf das Eingangssignal (E) eine Aussage über eine thermische Kopplung des Temperatursensors (5) an das Medium (M) zu ermitteln.

2. Vorrichtung (1) nach Anspruch 1,
wobei es sich bei der Aussage um eine Aussage über einen Wärmeübergangskoeffizienten, einen Wärmetransportwiderstand, einen Wärmeleitwiderstand und/oder einen Wärmedurchgangswert im Bereich des Temperatursensors (5), oder eines Übergangs zwischen dem Temperatursensor (5) und einem das Medium (M) enthaltenden Behältnisses (10), handelt, oder wobei es sich um eine Änderung eines mechanischen bzw. thermischen Kontakts von zumindest zwei Komponenten des Temperatursensors (5) oder dem Temperatursensor (5) und dem Behältnis (10) handelt,
und wobei die Diagnose-Einheit (9) dazu ausgestaltet ist,
- anhand des Ausgangssignals (A) einen Messwert für die Temperatur (T) des Mediums (M) zu ermitteln, wobei ein Wärmestrom (W), insbesondere eine Wärmeleitung, oder eine mit dem Wärmestrom in Verbindung stehende Größe, im Bereich des Temperatursensors (5) mittels des ersten Differenz-Temperatursensors (11) ermittelt wird,
- eine Messwertabweichung (δT) für den Messwert für die Temperatur (T) anhand eines Modells (MOD) für einen Wärmestrom (W) im Bereich des Temperatursensors (5) zu bestimmen und
- den Messwert für die Temperatur (T) mittels der Messwertabweichung (δT) zu korrigieren.

3. Vorrichtung (1) nach Anspruch 1,
wobei die Vorrichtung (1) einen Messeinsatz (3), in welchem der Temperatursensor (5) angeordnet ist, oder einen Messeinsatz (3) und einen Eintauchkörper (2) zur Aufnahme des Messeinsatzes (3) aufweist.

4. Vorrichtung (1) nach Anspruch 1, die Vorrichtung (1) derart ausgestaltet ist, dass der Temperatursensor (5) mittelbar oder unmittelbar an einer äußeren Wandung (W) eines Behältnisses (10) befestigbar ist.

5. Vorrichtung (1) nach zumindest einem der vorherigen Ansprüche,
umfassend eine Heizeinheit (7) zum Heizen eines den Temperatursensor (5) umgebenden Bereichs,
wobei die Diagnose-Einheit (9) dazu ausgestaltet ist, die Heizeinheit (7) mit dem Eingangssignal (E) mit variabler Leistung (P) zu beaufschlagen und aus dem Ausgangssignal (A) des Temperatursensors (5) die Aussage über eine thermische Kopplung des Temperatursensors (5) an das Medium (M) zu ermitteln.

6. Vorrichtung (1) nach zumindest einem der vorherigen Ansprüche, wobei die Diagnose-Einheit (9) einen Energiespeicher, insbesondere einen Kondensator oder einen Akku, umfasst.

7. Verfahren zum Betreiben einer Vorrichtung (1) zur Bestimmung und/oder Überwachung der Temperatur (T) eines Mediums (M) (4) nach zumindest einem der vorherigen Ansprüche 1 bis 6, wobei eine Leistung (P) eines Eingangssignals (E), mittels welchem der Temperatursensor (5) oder zumindest eine Komponente der Vorrichtung (1) beaufschlagbar ist, zeitlich variiert wird, und
wobei anhand eines Ausgangssignals (A) des Temperatursensors (5) in Reaktion auf das Eingangssignal (E) eine Aussage über eine thermische Kopplung des Temperatursensors (5) an das Medium (M) ermittelt wird, wobei es sich bei der Aussage über die thermische Kopplung um eine Aussage über einen Wärmeübergangskoeffizienten, einen Wärmetransportwiderstand, einen Wärmeleitwiderstand und/oder einen Wärmedurchgangswert im Bereich des Temperatursensors (5), oder eines Übergangs zwischen dem Temperatursensor (5) und einem das Medium (M) enthaltenden Behältnisses (10), handelt, oder wobei es sich um eine Änderung eines mechanischen bzw. thermischen Kontakts von zumindest zwei Komponenten des Temperatursensors (5) oder dem Temperatursensor (5) und dem Behältnis (10) handelt,
wobei anhand des Ausgangssignals (A) ein Messwert für die Temperatur (T) des Mediums (M) ermittelt wird,
wobei ein Wärmestrom (W), insbesondere eine Wärmeleitung, oder eine mit dem Wärmestrom in Verbindung stehende Größe, im Bereich des Temperatursensors (5) mittels des ersten Differenz-Temperatursensors (11) ermittelt wird,
und wobei eine Messwertabweichung (δT) für den Messwert für die Temperatur (T) anhand eines Modells (MOD) für einen Wärmestrom (W) im Bereich des Temperatursensors (5) bestimmt wird, und
wobei der Messwert für die Temperatur (T) mittels der Messwertabweichung (δT) korrigiert wird.

8. Verfahren nach Anspruch 7,
wobei eine Heizeinheit (7) zum Heizen eines den Temperatursensor (5) umgebenden Bereichs mit dem Eingangssignal beaufschlagt wird, und
wobei aus dem Ausgangssignal (A) des Temperatursensors (5) die Aussage über eine thermische Kopplung des Temperatursensors (5) an das Medium (M) ermittelt wird.

9. Verfahren nach Anspruch 7 oder 8,
wobei zur zeitlichen Variation der Leistung (P) des Eingangssignals € eine Frequenz- oder Amplitudenmodulation durchgeführt wird, oder
wobei ein gepulstes Eingangssignal (ΔP₁, ΔP₂) verwendet wird, insbesondere wobei einzelne Pulse zumindest hinsichtlich einer charakteristischen Größe, beispielsweise Frequenz oder Amplitude, variiert werden.

10. Verfahren nach zumindest einem der Ansprüche 8 bis 9,
wobei in einem Messbetriebsmodus die Temperatur (T) des Mediums (M) bestimmt wird, wobei in einem Diagnosebetriebsmodus die Aussage über eine thermische Kopplung des Temperatursensors (5) an das Medium (M) ermittelt wird, und
wobei der Messbetriebsmodus und der Diagnosebetriebsmodus gleichzeitig oder abwechselnd ausgeführt werden, oder wobei der Diagnosebetriebsmodus auf Bedarf durch einen Benutzer der Vorrichtung initialisiert wird.

11. Verfahren nach zumindest einem der Ansprüche 7 bis 10,
wobei zum Ermitteln der zumindest einen Aussage über eine thermische Kopplung des Temperatursensors (5) an das Medium (M) ein Aufheizverhalten, ein Abkühlverhalten, eine Ansprechzeit oder eine von zumindest einer dieser Größen abgeleitete Größe des Temperatursensors (5) herangezogen wird.

12. Verfahren nach Anspruch 11,
wobei ein zeitlicher Verlauf des Aufheizverhaltens, des Abkühlverhaltens, der Ansprechzeit oder der abgeleiteten Größe des Temperatursensors (5) betrachtet wird, und wobei anhand einer Änderung des Aufheizverhaltens, des Abkühlverhaltens, der Ansprechzeit oder der abgeleiteten Größe eine Änderung der thermischen Kopplung festgestellt wird.

13. Verfahren nach Anspruch 12,
wobei zumindest ein Parameterwert eines Parameters des Modells (MOD) anhand der Aussage über die thermische Kopplung des Temperatursensors (5) an das Medium (M) bestimmt wird.

14. Verfahren nach Anspruch 12 oder 13,
wobei für zumindest einen Parameter des Modells (MOD) eine Vielzahl an Parameterwerten in Abhängigkeit der thermischen Kopplung des Temperatursensors (5) vorgegeben oder hinterlegt sind, und wobei in Abhängigkeit der ermittelten Aussage über die Kopplung ein Parameterwert für den Parameter ausgewählt wird,
oder wobei der Parameterwert anhand der Aussage über die Kopplung ermittelt wird.

## Claims

1. A device (1) for determining and/or monitoring the temperature (T) of a medium (M), wherein the device comprises a temperature sensor (5) for detecting the temperature (T), and electronics (4), wherein the temperature sensor (5) comprises a temperature-sensitive sensor element (13) which is electrically connected to the electronics (4) via at least one first connection cable (6a) and one second connection cable (6b),
wherein the first connection cable (6a) is subdivided into a first (I) and a second section (II),
wherein the first section (I) facing the sensor element (13) comprises a first material, and wherein the second section (II) facing away from the sensor element (13) comprises a second material that differs from the first material, wherein the second connection cable (6b) is made from the second material, and wherein the first section (I) of the first connection cable (6a) and at least one part (t) of the second connection cable (6b) create a first differential temperature sensor (11) in the form of a thermocouple, **characterized in that** the device comprises a diagnostics unit (9)
which has equipment (9a) for varying over time a power (P) of an input signal (E) which can be supplied to the temperature sensor (5) or at least one component of the device (1), and
said diagnostics unit (9) being configured to determine a statement about a thermal coupling of the temperature sensor (5) to the medium (M) based on an output signal (A) of the temperature sensor (5) in response to the input signal (E).

2. The device (1) as claimed in claim 1,
wherein the statement is a statement about a heat transfer coefficient, a heat transfer resistance, a thermal resistance and/or a thermal conductivity in the area of the temperature sensor (5), or of a transition between the temperature sensor (5) and a container (10) filled with the medium (M), or wherein it is a change of a mechanical and/or thermal contact between at least two components of the temperature sensor (5), or between the temperature sensor (5) and the container (10),
and wherein the diagnostics unit (9) is configured
- to determine a measured value for the temperature (T) of the medium (M) based on the output signal (A), wherein a heat flow (W), in particular a thermal conduction, or a variable related to the heat flow, is determined in the area of the temperature sensor (5) using the first differential temperature sensor (11),
- to determine a measured value deviation (δT) for the measured value for the temperature (T) using a model (MOD) for a heat flow in the area of the temperature sensor (5), and
- to correct the measured value for the temperature (T) using the measured value deviation (δT).

3. The device (1) as claimed in claim 1, wherein the device (1) has a measuring insert (3) in which the temperature sensor (5) is arranged, or a measuring insert (3) and an immersed body (2) for mounting the measuring insert (3).

4. The device (1) as claimed in claim 1, the device (1) being configured in such a way that the temperature sensor (5) can be attached directly or indirectly to an outer wall (W) of a container (10).

5. The device (1) as claimed in at least one of the preceding claims,
comprising a heating unit (7) for heating an area around the temperature sensor (5),
wherein the diagnostics unit (9) is configured to supply the heating unit (7) with the input signal (E) of variable power (P) and to determine the statement about a thermal coupling of the temperature sensor (5) to the medium (M) from the output signal (A) of the temperature sensor (5).

6. The device (1) as claimed in at least one of the preceding claims, wherein the diagnostics unit (9) comprises an energy storage unit, in particular a capacitor or a battery.

7. A method for operating a device (1) for determining and/or monitoring the temperature (T) of a medium (M) (4) as claimed in at least one of preceding claims 1 to 6, wherein a power (P) of an input signal (E) which can be supplied to the temperature sensor (5) or at least one component of the device (1) is varied over time, and
wherein a statement about a thermal coupling of the temperature sensor (5) to the medium (M) is determined based on an output signal (A) of the temperature sensor (5) in response to the input signal (E), wherein the statement about the thermal coupling is a statement about a heat transfer coefficient, a heat transfer resistance, a thermal resistance and/or a thermal conductivity in the area of the temperature sensor (5), or of a transition between the temperature sensor (5) and a container (10) filled with the medium (M), or wherein it is a change of a mechanical and/or thermal contact between at least two components of the temperature sensor (5), or between the temperature sensor (5) and the container (10),
wherein a measured value for the temperature (T) of the medium (M) is determined using the output signal (A),
wherein a heat flow (W), in particular a thermal conduction, or a variable related to the heat flow, is determined in the area of the temperature sensor (5) using the first differential temperature sensor (11),
and wherein a measured value deviation (δT) for the measured value for the temperature (T) is determined using a model (MOD) for a heat flow (W) in the area of the temperature sensor (5), and wherein the measured value for the temperature (T) is corrected using the measured value deviation (δT).

8. The method as claimed in claim 7, wherein a heating unit (7) for heating an area around the temperature sensor (5) is supplied with the input signal, and
wherein the statement about a thermal coupling of the temperature sensor (5) to the medium (M) is determined from the output signal (A) of the temperature sensor (5).

9. The method as claimed in claim 7 or 8, wherein a frequency or amplitude modulation is performed to vary the power (P) of the input signal € over time, or
wherein a pulsed input signal (ΔP₁, ΔP₂) is used, in particular wherein individual pulses are varied at least in terms of a characteristic variable, for example frequency or amplitude.

10. The method as claimed in at least one of claims 8 or 9,
wherein the temperature (T) of the medium (M) is determined in a measuring operating mode, wherein the statement about a thermal coupling of the temperature sensor (5) to the medium (M) is determined in a diagnostic operating mode, and
wherein the measuring operating mode and the diagnostic operating mode are implemented simultaneously or alternately, or wherein the diagnostic operating mode is initialized by a user of the device if required.

11. The method as claimed in at least one of claims 7 to 10,
wherein a heating behavior, a cooling behavior, a response time or a variable of the temperature sensor (5) derived from at least one of these variables is used to determine the at least one statement about a thermal coupling of the temperature sensor (5) to the medium (M).

12. The method as claimed in claim 11,
wherein a pattern over time of the heating behavior, the cooling behavior, the response time or the derived variable of the temperature sensor (5) is considered,
and wherein a change of the thermal coupling is detected based on a change of the heating behavior, the cooling behavior, the response time or the derived variable.

13. The method as claimed in claim 12,
wherein at least one parameter value of a parameter of the model (MOD) is determined based on the statement about the thermal coupling of the temperature sensor (5) to the medium (M).

14. The method as claimed in claim 12 or 13,
wherein a variety of parameter values depending on the thermal coupling of the temperature sensor (5) are specified or stored for at least one parameter of the model (MOD), and wherein a parameter value is selected for the parameter depending on the statement determined about the coupling, or wherein the parameter value is determined based on the statement about the coupling.

## Revendications

1. Dispositif (1) destiné à la détermination et/ou à la surveillance de la température (T) d'un produit (M), le dispositif comprenant un capteur de température (5) destiné à mesurer la température (T) et une électronique (4),
le capteur de température (5) comprenant un élément capteur sensible à la température (13), lequel élément est relié électriquement à l'électronique (4) par au moins un premier câble de raccordement (6a) et un deuxième câble de raccordement (6b),
le premier câble de raccordement (6a) étant divisé en une première section (I) et une deuxième section (II), la première section (I) tournée vers l'élément capteur (13) étant constituée d'un premier matériau et la deuxième section (II), opposée à l'élément capteur (13), étant constituée d'un deuxième matériau différent du premier matériau, le deuxième câble de raccordement (6b) étant constitué du deuxième matériau,
et la première section (I) du premier câble de raccordement (6a) et au moins une partie (t) du deuxième câble de raccordement (6b) formant un premier capteur de température différentielle (11) sous la forme d'un thermocouple,
**caractérisé en ce que** le dispositif comprend une unité de diagnostic (9), laquelle unité comprend un module (9a) destiné à faire varier dans le temps une puissance (P) d'un signal d'entrée (E) - au moyen duquel le capteur de température (5) ou au moins un composant du dispositif (1) peut être alimenté - et laquelle unité de diagnostic (9) étant conçue pour déterminer, à l'aide d'un signal de sortie (A) du capteur de température (5) en réponse au signal d'entrée (E), une indication sur un couplage thermique du capteur de température (5) au produit (M).

2. Dispositif (1) selon la revendication 1,
pour lequel, concernant l'indication, il s'agit d'une indication d'un coefficient de transfert thermique, d'une résistance au transport thermique, d'une résistance thermique et/ou d'une valeur de transmission thermique dans la zone du capteur de température (5) ou d'une transition entre le capteur de température (5) et un réservoir (10) contenant le produit (M), ou
pour lequel, concernant l'indication, il s'agit d'une modification d'un contact mécanique ou thermique d'au moins deux composants du capteur de température (5) ou du capteur de température (5) et du réservoir (10),
et pour lequel l'unité de diagnostic (9) est conçue pour
- déterminer, à partir du signal de sortie (A), une valeur mesurée pour la température (T) du produit (M),
un flux thermique (W), notamment une conduction thermique, ou une grandeur en relation avec le flux thermique, étant déterminé dans la zone du capteur de température (5) à l'aide du premier capteur de température (11)
- déterminer un écart de mesure (δT) pour la valeur mesurée de température (T) à l'aide d'un modèle (MOD) pour un flux thermique dans la zone du capteur de température (5) et
- corriger la valeur mesurée de température (T) à l'aide de l'écart de mesure (δT).

3. Dispositif (1) selon la revendication 1,
pour lequel le dispositif (1) comprend un insert de mesure (3) dans lequel est disposé le capteur de température (5), ou un insert de mesure (3) et un corps plongeur (2) destiné à recevoir l'insert de mesure (3).

4. Dispositif (1) selon la revendication 1, le dispositif (1) étant conçu de telle sorte que le capteur de température (5) peut être fixé directement ou indirectement à une paroi extérieure (W) d'un réservoir (10).

5. Dispositif (1) selon au moins l'une des revendications précédentes,
lequel dispositif comprend une unité de chauffage (7) destinée à chauffer une zone entourant le capteur de température (5),
l'unité de diagnostic (9) étant conçue pour alimenter l'unité de chauffage (7) avec le signal d'entrée (E) à puissance variable (P) et à déterminer, à partir du signal de sortie (A) du capteur de température (5), l'indication relative à un couplage thermique du capteur de température (5) au produit (M).

6. Dispositif (1) selon au moins l'une des revendications précédentes, pour lequel l'unité de diagnostic (9) comprend un accumulateur d'énergie, notamment un condensateur ou une batterie rechargeable.

7. Procédé pour faire fonctionner un dispositif (1) destiné à déterminer et/ou à surveiller la température (T) d'un produit (M) (4) selon au moins l'une des revendications précédentes 1 à 6, procédé pour lequel une puissance (P) d'un signal d'entrée (E) - au moyen duquel le capteur de température (5) ou au moins un composant du dispositif (1) peut être alimenté - est modifiée dans le temps, et procédé pour lequel, à l'aide d'un signal de sortie (A) du capteur de température (5) en réaction au signal d'entrée (E), une indication sur un couplage thermique du capteur de température (5) au produit (M) est déterminée, l'indication sur le couplage thermique étant une indication sur un coefficient de transfert thermique, une résistance au transport thermique, une résistance thermique et/ou une valeur de transmission thermique dans la zone du capteur de température (5), ou d'une transition entre le capteur de température (5) et un réservoir (10) contenant le produit (M), ou procédé pour lequel il s'agit d'une modification d'un contact mécanique ou thermique d'au moins deux composants du capteur de température (5) ou du capteur de température (5) et du réservoir (10),
une valeur mesurée de température (T) du produit (M) étant déterminée à l'aide du signal de sortie (A),
un flux thermique (W), notamment une conduction thermique, ou une grandeur liée au flux thermique, étant déterminé dans la zone du capteur de température (5) à l'aide du premier capteur de température différentielle (11),
et un écart de mesure (δT) pour la valeur mesurée de température (T) étant déterminé à l'aide d'un modèle (MOD) pour un flux thermique (W) dans la zone du capteur de température (5), et
la valeur mesurée de température (T) étant corrigée à l'aide de l'écart de mesure (δT).

8. Procédé selon la revendication 7,
pour lequel une unité de chauffage (7) destinée à chauffer une zone entourant le capteur de température (5) est alimentée par le signal d'entrée, et
pour lequel le signal de sortie (A) du capteur de température (5) permet de déterminer le couplage thermique du capteur de température (5) au produit (M).

9. Procédé selon la revendication 7 ou 8,
pour lequel, pour faire varier dans le temps la puissance (P) du signal d'entrée (E), une modulation de fréquence ou d'amplitude est effectuée, ou
pour lequel un signal d'entrée pulsé (ΔP₁, ΔP₂) est utilisé, les différentes impulsions variant notamment au moins en ce qui concerne une grandeur caractéristique, par exemple la fréquence ou l'amplitude.

10. Procédé selon au moins l'une des revendications 8 à 9,
pour lequel, dans un mode de fonctionnement de mesure, la température (T) du produit (M) est déterminée,
pour lequel, dans un mode de fonctionnement de diagnostic, l'indication relative à un couplage thermique du capteur de température (5) au produit (M) est déterminée, et
pour lequel le mode de fonctionnement de mesure et le mode de fonctionnement de diagnostic sont exécutés simultanément ou en alternance, ou
pour lequel le mode de fonctionnement de diagnostic est initialisé à la demande par un utilisateur du dispositif.

11. Procédé selon au moins l'une des revendications 7 à 10,
pour lequel, pour déterminer au moins une indication sur un couplage thermique du capteur de température (5) au produit (M), on utilise un comportement d'échauffement, un comportement de refroidissement, un temps de réponse ou une grandeur dérivée d'au moins l'une de ces grandeurs du capteur de température (5).

12. Procédé selon la revendication 11,
pour lequel on observe l'évolution dans le temps du comportement d'échauffement, du comportement de refroidissement, du temps de réponse ou de la grandeur dérivée du capteur de température (5), et
pour lequel on détermine une modification du couplage thermique à partir d'une modification du comportement d'échauffement, du comportement de refroidissement, du temps de réponse ou de la grandeur dérivée.

13. Procédé selon la revendication 12,
pour lequel au moins une valeur d'un paramètre du modèle (MOD) est déterminée à partir de l'indication relative au couplage thermique du capteur de température (5) au produit (M).

14. Procédé selon la revendication 12 ou 13,
pour lequel une pluralité de valeurs de paramètres sont prédéfinies ou enregistrées pour au moins un paramètre du modèle (MOD) en fonction du couplage thermique du capteur de température (5), et
pour lequel une valeur de paramètre est sélectionnée pour le paramètre en fonction de l'indication déterminée sur le couplage, ou
pour lequel la valeur de paramètre est déterminée à l'aide de l'indication sur le couplage.
